# EUROPEAN PATENT APPLICATION

(11) **EP 2 246 817 A1**
(43) Date of publication of application: **03.11.2010**
(21) Application number: 10250835.5
(22) Date of filing: 27.04.2010
(51) Int. Cl.: G06Q 40/00

(54) **Economic intelligence forecast**

(30) Priority: 27.04.2009 US 430514
(71) Applicant: Bank of America Corporation, Charlotte, NC 28255 (US)
(72) Inventor: Newman, Kurt, Charlotte North Carolina 28255 (US); Ghosh, Debashis, Charlotte North Carolina 28255 (US); Joa, David, Charlotte North Carolina 28255 (US); Bendel, Timothy, Charlotte North Carolina 28255 (US); Krein, Mark, Charlotte North Carolina 28255 (US); Lai, Aaron, Charlotte North Carolina 28255 (US)
(74) Representative: Jackson, Robert Patrick

(57) **Abstract**

Aspects of the invention provide for the use of transactional data in the forecasting of an index score, such as a financial index that predicts market conditions. Such forecasting may better prepare individuals and entities for depressed economic conditions. A comparison engine may be configured to compare the financial variable of the transactional data and the transactional data's date against an index score of an index on a date to determine the correlation of at least a portion of transactions represented by the transactional data with the index score. A selection engine may be configured to select a portion of transactions that are more correlated to the index than other transactions. An index score may be forecasted with the selected transactions. Additional transactional data may be extracted from one or more physical documents, such as an invoice, a statement, and/or commercial paper.

## Description

Aspects of the disclosure relate to using financial transactional data to forecast trends. More specifically, aspects of the disclosure relate to forecasting trends of an index score.

Currently, there are known indexes that attempt to monitor the economic conditions of a region, such as the United States. For example, the Consumer Sentiment Index compiled by the University of Michigan and the Consumer Confidence Index compiled by the Conference Board attempt to indicate where the market may be headed. Both indexes are based on surveys where consumers state if they believe the economy will improve or deteriorate during the next few months. While providing a subjective measure of the economic forces, they are subjected to emotions, such as panic and/or exited exuberance.

Currently, there is no way to determine that every individual providing the subjective input has the same information, or if they have accurate information. Moreover, several indications demonstrate that not all individuals conduct actions consistent to what they reveal in surveys. There have been instances where the above-referenced indexes are not correlated with the economic conditions. For example, stock prices may advance while the indexes show very weak consumer sentiment.

Moreover, several indices, for example a financial index, may have short-term and long-term trends. Several decades of research has not provided objective measures to forecast trends of index scores of such indexes. Forecasting of an index may be beneficial for several reasons, including allowing individuals and entities to be better prepared for an economic downturn.

The following presents a simplified summary in order to provide a basic understanding of some aspects of the invention. The summary is not an extensive overview of the invention. It is neither intended to identify key or critical elements of the invention nor to delineate the scope of the invention. The following summary merely presents some concepts of the invention in a simplified form as a prelude to the description below.

In one aspect of the invention, methods may be utilized to forecast an index score of an index. In one embodiment, transactional data may be quantified. The transactional data may include a date related to the transaction as well as an identity variable. In one embodiment, the identity variable may identify an entity involved in the transaction. Yet in another embodiment, the identity variable may identify an economic sector that the entity is categorized within or related to the goods and services of the entity. In one embodiment, the quantification of the transactional data may be performed according to a financial variable. In one embodiment, the financial variable may include a volume of transactions, yet in another embodiment, it may include the monetary amount of the transaction or other factors.

According to one exemplary method, a subset of the transactional data is processed. In one embodiment, an apparatus may comprise a comparison engine configured to process at least a subset of the transactional data. In one embodiment, the comparison engine may compare the financial variable of the transactional data and the transactional data's date against an index score of an index on a date to determine the correlation of at least a portion of transactions represented by the transactional data with the index score.

In one embodiment, a portion of transactions that are more correlated to the index than a second portion are selected. Such methods may be conducted by a selection engine. An index score may be calculated with the portion of transactions that are most correlated to the index. In one embodiment, the forecasting may be conducted by a forecast engine configured to forecast an index score of the index for a date.

Additional transactional data may be extracted from one or more physical documents. The extracted transactional data may be converted to a form substantially similar to the transactional data from electronic transactions. Such physical documents may include, for example, an invoice, a statement, and/or commercial paper.

Further methods may be implemented to identify entities within an economic sector having a predefined quantity of transactions within a predefined time period. In one embodiment, if transactions involving specific entities do not have the predefined quantity of transactions, they may not be processed, for example, by the comparison engine. Yet other methods determine if the monetary amount of a transaction is below a predetermined numerical value. In one embodiment, the transactional data may not be utilized to determine the correlation of at least a portion of transactions represented by the transactional data with the index score if the monetary value is below a threshold value.

Viewed from another aspect, the present invention provides a computer-implemented method of forecasting trends with a system having a processor and a memory, the method comprising: quantifying transactional data stored in the memory comprising a date and an identity variable selected from the group consisting of: an entity, an economic sector, and combinations thereof, wherein the transactional data is quantified according to a financial variable selected from the group consisting of: volume of transactions, the monetary amount of the transactions, and combinations thereof; processing at least a subset of the transactional data with a comparison engine configured to compare the financial variable of at least a subset of the transactional data and the transactional data's date against an index score of an index on a date to determine the correlation of at least a portion of transactions represented by the transactional data with the index score; selecting with a selection engine a portion of transactions that are more correlated to the index than a second portion; and forecasting with a forecast engine an index score of the index for a date in the future.

Viewed from another aspect, the present invention provides a computer-implemented method of forecasting trends with a system having a processor and a computer-readable medium comprising computer-executable instructions that when executed perform a method comprising: quantifying transactional data representing transactions comprising a date and an identity variable, wherein the transactional data is quantified according to a financial variable; processing at least a subset of the transactional data with a comparison engine configured to compare the financial variable of the transactional data and the transactional data's date against an index score of an index on a date to determine the correlation of at least a portion of transactions represented by the transactional data with the index score; selecting with a selection engine a portion of transactions that are more correlated to the index than a second portion, wherein the transactional data for at least one of the transactions comprises an entity and wherein the transactional data for at least a second transaction comprises an economic sector; and forecasting with a forecast engine an index score of the index for a date.

Viewed from yet another aspect, the present invention provides an apparatus comprising: a processor; a tangible computer-readable medium comprising computer-executable instructions that when executed by the processor cause the apparatus to perform a method comprising: receiving transactional data comprising a date and an identity variable selected from the group consisting of: an entity, an economic sector, and combinations thereof, wherein the transactional data has been quantified according to a financial variable selected from the group consisting of: volume of transactions, the monetary amount of the transactions, and combinations thereof; a comparison engine configured to process at least a subset of the transactional data by comparing the financial variable of the transactional data and the transactional data's date against an index score of an index on a date to determine the correlation of at least a portion of transactions represented by the transactional data with the index score; a selection engine configured to select a portion of transactions that are more correlated to the index than a second portion; and a forecast engine for forecasting an index score of the index for a date.

Certain preferred embodiments of the present invention will now be described by way of example and not limited in the accompanying figures in which like reference numerals indicate similar elements, where:

FIG. 1 illustrates an example of a suitable operating environment in which various aspects of the invention may be implemented;

FIG. 2 illustrates a simplified diagram of a transactional computer in accordance with an aspect of the invention; and

FIG. 3 is a flowchart of an exemplary method in accordance with one embodiment of the invention.

FIG. 4 is a flowchart of an exemplary method in accordance with one embodiment of the invention.

Fig. 5 is a graph showing an exemplary forecast according to one embodiment of the invention.

Fig. 6 is a graph showing another exemplary forecast according to one embodiment of the invention.

In accordance with various aspects of the disclosure, systems and methods are illustrated for generating transactional financial statements and indices. A financial institution such as a bank may utilize customer transactional data to assist in credit decisions and/or product offerings.

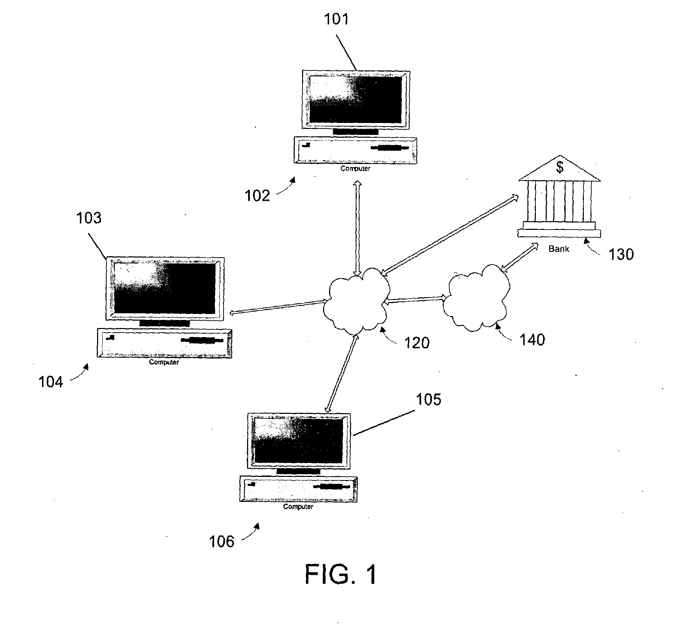

FIG. 1 illustrates an example of a suitable operating environment in which various aspects of the disclosure may be implemented. Computers 102, 104, 106 may be located at various locations such as locations 101, 103, and 105. The location may be internal or external to a financial institution such as a bank 130. Computers 102, 104, 106 may be transactional computers or terminals found on various internal and external networks. The computers 102, 104, 106 may contain transactional information for numerous customers. Such transactional data may include credit and debit card transactions, electronic bill payment transactions, and demand deposit account transactions. Those skilled in the art will realize that additional computers may be included and that those described below in the illustrative embodiments are not intended to be limiting of the scope of the invention. Furthermore, the transactional data may also include numerous other types of customer transactional data which may be used in various embodiments of the invention

FIG. 1 further illustrates computers 102, 104, and 106 may be connected to a communications network such as communications network 120. Communications network 120 may represent: 1) a local area network (LAN); 2) a simple point-to-point network (such as direct modem-to-modem connection); and/or 3) a wide area network (WAN), including the Internet and other commercial based network services.

Computers 102, 104, and 106 may communicate with one another or with a financial institution such as bank 130 via communication network 120 in ways that are well known in the art. The existence of any of various well-known protocols, such as TCP/IP, Ethernet, FTP, HTTP, Bluetooth®, Wi-Fi, ultra wide band (UWB), low power radio frequency (LPRF), radio frequency identification (RFID), infrared communication, IrDA, third-generation (3G) cellular data communications, Global System for Mobile communications (GSM), or other wireless communication networks or the like may be used as the communications protocol. Communications network 120 may be directly connected to a financial institution such as bank 130. In another embodiment, communications network 120 may be connected to a second network or series of networks 140 before being connected to bank 130.

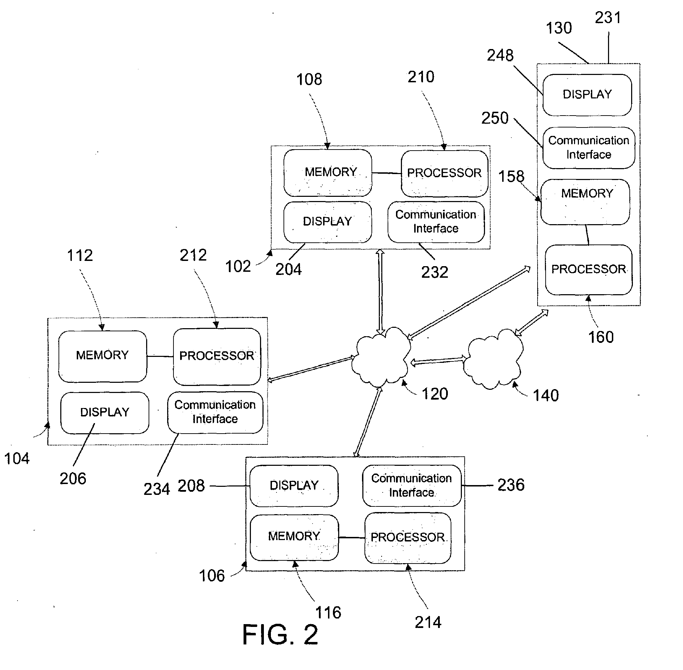

FIG. 2 illustrates a simplified diagram of a computer in accordance with an aspect of the invention. The computers may comprise memories (108, 112, and 116) processors (210, 212, and 214), displays (204, 206, and 208), and communication interfaces (232, 234, and 236). The processors 210, 212, and 214 may execute computer-executable instructions present in memory 108, 112, 116 such that, for example, computer 102, 104, and 106 may send and receive information to and from bank 130 via network or networks 120 and/or 140. Bank 130 may utilize an infrastructure which includes a server 231 having components such as memory 158, processor 160, display 248, and communication interface 250. The memory for each of the computers 102, 104, and 106 and server 231 may include non-volatile and/or volatile memory.

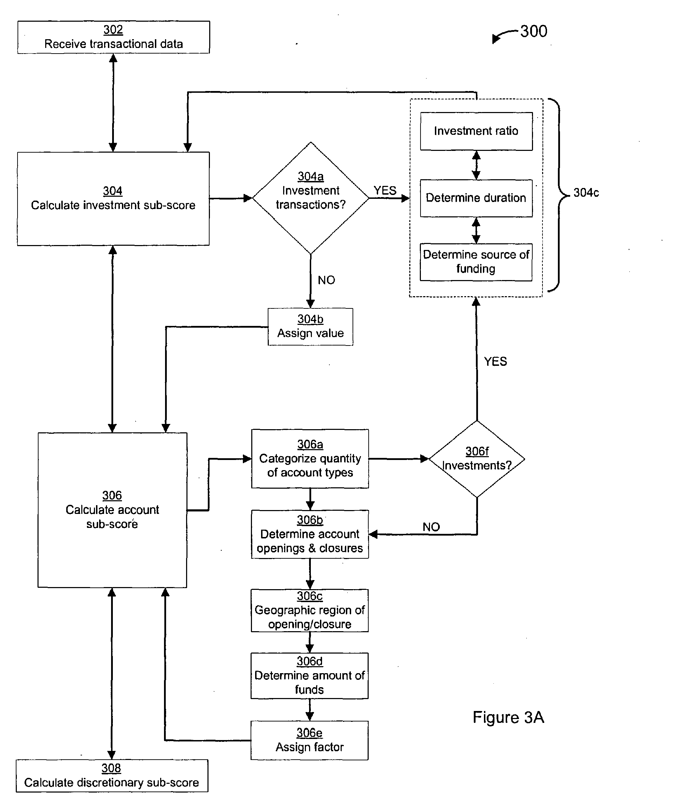

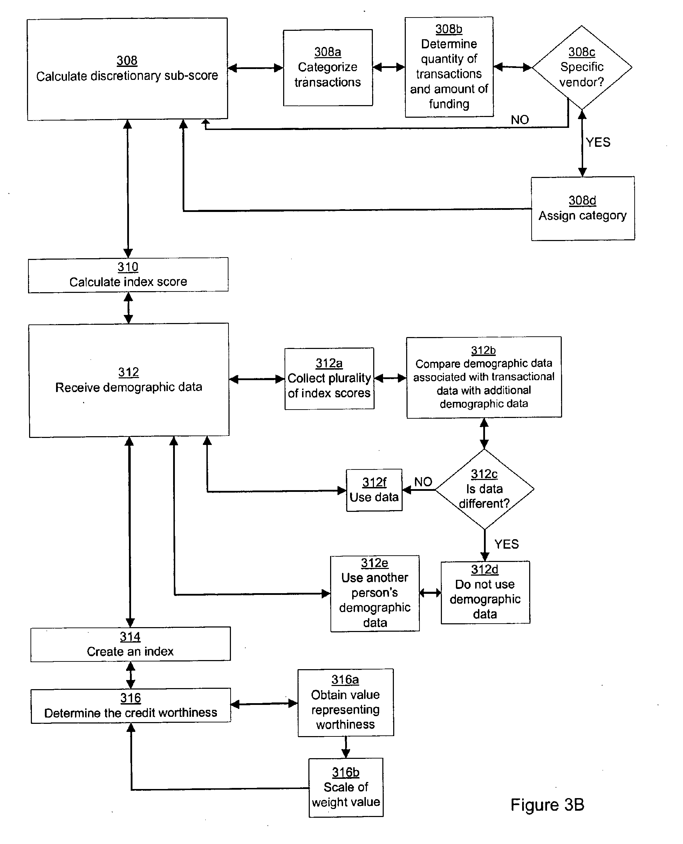

Figure 3 shows a flow chart of an exemplary method of calculating one or more sub-scores that may be utilized in the formation of an index in accordance with embodiments of the invention. At step 302, transactional data relating to an individual, an entity, or economic sector may be retrieved. The transactional data may reside on one more computer-readable mediums, such as memories 108, 112, and 116, which may be located within numerous internal and/or external systems. Indeed, at least a portion of the transactional data retrieved as part of step 302 is remotely located from other transactional data. Exemplary transactional data may include checking account transactions, electronic bill payments transactions, and/or credit/debit card transactions. While the retrieval of the transactional data is shown by way of step 302, those skilled in the art having the benefit of this disclosure will readily appreciate that the retrieval of the transactional data may be conducted before, during, or after any other steps or processes within the methods disclosed herein. In one embodiment, the retrieval of data is ongoing and is being updated on a routine basis.

In one embodiment, an investment sub-score may be calculated at step 304. The investment sub-score may be calculated with consideration to one or more investment-related elements, variables, and weightings. As the exemplary method provided in Figure 3a shows, one embodiment may determine whether the transactional data collected in step 302 comprises an investment transaction (see 304a). In one embodiment, if the transactional data does not comprise an investment, a predefined value may be assigned as the investment sub-score (see 304b). In one embodiment where the predefined value is assigned, the value may be indicative of an unfavorable economic climate. Yet in another embodiment, the value may indicate that economic climate (at least with respect to that sub-score) is neither favorable nor unfavorable. Indeed, as explained in more detail below, if the transactional data comprises an investment (or even several investments), this would not automatically indicate a favorable score for the investment sub-score. Rather, as explained in more detail below, many considerations which have not been historically considered when forecasting the economic climate, may be considered when determining the status of the economic climate.

If at step 304a, it is determined that the transactional data (i.e., the data retrieved at step 302), comprises investment transaction(s), step 304c may be performed. At step 304c, one or more aspects regarding the investment transaction may be considered. In one embodiment, the source of funding for the investment is determined. Indeed, the source of funding for an investment transaction may provide valuable information when calculating the investment sub-score. For example, if an individual or an entity transfers funds from a low-interest checking account to purchase stocks or ETFs (electronically traded funds), this may indicate a more favorable economic climate than, for example, if the individual or entity removed money from a stock brokerage to invest in a more-stable, low yield CD (Certificate of Deposit).

In yet another embodiment, the duration of the investment(s) is determined. Indeed, the amount of time an individual or entity is willing to commit funds for may provide an indication of the impact of any favorable or unfavorable economic conditions. For example, if an entity that routinely reinvests funds from 2-year term CDs, suddenly reinvests the funds in a 6-month term CD, this may be indicative of favorable economic conditions. Moreover, even if an individual or entity sells stocks and reinvests the funds into a CD may not a very unfavorable market. Indeed, if the individual or entity invests in a 6-month CD rather than a 2-year CD, this may factor into how long or severe any unfavorable economic conditions (either real or perceived) may be felt. Indeed, merely classifying all CDs or any other type of investment into a single category may not provide an accurate indication of economic conditions for a specific individual, entity, or economic sector.

Furthermore, one or more of the considerations of 304c may be within the context of a time-frame. For example, in one embodiment, the amount of funds committed to the investment is determined as a ratio to a user's or entity's spending (or spending within the economic sector for the entities or individuals within that sector), such as overall spending or discretionary spending for a time-frame. Indeed, while a steady monthly commitment of funding for investments may not provide an accurate picture, determining the commitment in view of total or discretionary spending may provide a more accurate insight to the economic conditions facing that individual or entity.

In one embodiment, discretionary spending may be determined by industry in which the funds were committed to. In one embodiment, industries that may be categorized as discretionary spending may include, but are not limited to: Airlines, Coffee Stores, Craft Stores, Entertainment, Lodging, Rental Cars, Restaurants, Retailers - Up Scale, Smoothie Stores, and/or Travel Services. Further calculations of discretionary spending are provided in more detail below in context of step 308, which may be incorporated into step 304c.

As shown in Figure 3, steps 304a-304c may be performed as a continuous repeated path. Those skilled in the art, however, will readily appreciate that specific steps may be omitted, modified, or introduced without departing from the scope of this disclosure. Indeed, in one embodiment, as discussed above, information from step 308 may be received and/or utilized at step 304.

In one embodiment, method 300 may incorporate the calculation of an account sub-score (i.e., step 306). While step 306 is shown below step 304, there is no requirement that step 304 be conducted first. Indeed, steps 304 and 306 may occur in any order and/or simultaneously. In one embodiment, step 306a may categorize a quantity of financial accounts associated with the individual or entity into an account type. Exemplary account types may include, but are not limited to: checking, savings, investment, mortgage, HELOC (Home Equity Line or Credit), and other loans. Indeed, such categories may further be subdivided to allow the analysis of more specific categories. For example, an entity may have a primary and a secondary savings account. Moreover, determining if a loan is for a personal watercraft as opposed to a primary car to get to work may provide more detailed analysis. Furthermore, because the accounts are quantified, this may provide information for the amount of and type of accounts being opened or closed. This analysis may also be conducted in view of a geographic range. Indeed, step 306 may incorporate one or more steps to determine whether at least one account was opened or closed with a time frame (306b) and determine a geographic location where the at least one account was opened or closed (306c). Such information may be useful when comparing several scores for a plurality of individuals or entities, for example, when creating an index at step 314.

Indeed, in one embodiment, an index score may be created for a user-defined geographic region. For example, if a geographic region's industry relies heavy on oil and gas production and indications from methods incorporating one or more teachings of this disclosure suggest that savings accounts are being closed and/or are being depleted from funds (such as may be determined at step 306d - which determines the amount of funds within one or more of the financial accounts), this may suggest unfavorable local economic conditions, however, may not (depending on the severity) affect a larger geographic region (e.g., nationally). In contrast, an increase in funds being deposited into savings or investment accounts in a regions heavily dominated by oil and gas may signify a forecasted improvement in other geographic regions in a set time-frame.

Step 306e may be performed to assign a factor to at least one account based upon financial characteristics of the account that differ from other accounts within the same account type. In one embodiment, step 306e may consider the interest rate on a loan or the return on an investment account. Indeed, if an entity or individual is suddenly opening high interest rate credit accounts (in which the determination of "high interest rate" may be based on their past accounts), these accounts may be applied a factor so their "weight" is considered more or less significant in further calculations.

The calculation of the account sub-score at step 306 may be a function of the quantity of funds within a plurality of the account types for a time frame. For embodiments, where a plurality of entities and/or individuals' accounts are considered, such as when compiling an index, certain types of accounts may be considered, such as only accounts belonging to entities within a certain industry or group of industries. Other factors may include the geographic and/or time frames. Moreover, several accounts closing in one geographic range may be offset with other accounts opening in another geographic range, suggesting a population migration. In one embodiment, the contact information on file for at least one of the accounts is determined to ensure that the closure of an account is not due to a relocation of the individual or entity. For example, if it appears that a savings account has been depleted or closed, the contact information of one or more remaining accounts may be consulted to confirm the entity or user has not moved.

In certain embodiments, data from step 306 may be utilized in step 304. For example, if an account is identified as an investment account in step 306f, one or more characteristics regarding the account and/or any results from step 306 relating to the investment account may be inputted into step 304c. Moreover, having data from multiple accounts may provide a more accurate forecast of economic conditions. For example, if a user opens an investment account in the form of a CD, however, cuts spending by 20%, this may indicate perceived or actual unfavorable economic conditions, despite the fact that the user has opened an investment account. However, if the user merely shifts 5% of spending into an investment account, it may not favor unfavorable economic conditions. As discussed above, these trends may be monitored over a period of time to continually update financial models and/or provide an economic outlook for a different time frame.

Looking to Fig. 3B, step 308 may be implemented in one embodiment to categorize transactions within the transactional data as either discretionary or necessity. In one embodiment, at least a portion of the data is categorized within an expenditure category. In one embodiment step 308a is utilized to categorize the transactions into a number of different categories. The categories may allow for segmentation of the data and provide useful data trends over time. The categories may include:
- 1.: Airlines
- 2.: Automobiles
- 3.: Brokerage
- 4.: Business Income
- 5.: Business Contractors / Supply
- 6.: Cash
- 7.: Charities & Donation
- 8.: Coffee Stores
- 9.: Computer Hardware/Software
- 10.: Craft stores
- 11.: Drug Stores/Pharmacy
- 12.: Debt Payments (not including Credit Cards with zero revolving balance)
- 13.: Education (Schools, Colleges, Universities, Vocational)
- 14.: Electronic Stores, retailers (online retailers)
- 15.: Entertainment
- 16.: Financial Services
- 17.: Fitness
- 18.: Gas Stations
- 19.: Grocery Stores
- 20.: Hair Care
- 21.: Health care
- 22.: Home Improvement Stores
- 23.: Income
- 24.: Insurance
- 25.: Internet Service Providers
- 26.: Lodging
- 27.: Magazine Subscriptions
- 28.: Mortgage Debt Payments
- 29.: Other Income
- 30.: Parking
- 31.: Pet Stores
- 32.: Phone Service
- 33.: Prepaid Cards
- 34.: Rental Cars
- 35.: Restaurants
- 36.: Discount Retailers
- 37.: Non-Discount Retailers
- 38.: Retirement Income
- 39.: Satellite TV/Cable TV
- 40.: Small Businesses
- 41.: Smoothie Stores
- 42.: Travel Services
- 43.: Utilities
- 44.: Wireless Phone Service

Those skilled in the art will realize that the above list of categories is not exhaustive but rather an exemplary listing.

Step 308b may be implemented to determine i) the quantity of transactions and ii) the amount of spending for the transactions for a time frame for at least one expenditure category. Indeed, the quantity of transactions may provide some insight into the economic forces faced by the individual or entity. For example, if a user drastically increases spending at the Smoothies Stores (category 41), this may not truly indicate a discretionary item if it appears from the number of transactions that the user is replacing a regular restaurant for lunch with products from the Smoothie Stores. Furthermore, if a user has several purchases from fast food restaurants, this may not indicate that the user is cutting back spending, rather by looking into the spending over a previous time period, it may demonstrate that this is a user who historically brought their own lunch to work from home and now is starting to dine out, and thus spend more discretionary income.

Step 308c may be implemented to determine if at least one transaction was conducted with at least one specific vendor. For example, merely reviewing the quantity of transactions or even the total expenditure within category of "Home Improvement" (Category 22) may not provide an accurate portrayal of economic conditions. For example, spending $500.00 may be routine expenditures for trash bags, light bulbs, cleaning supplies, and the like; however, it may also be a single large purchase like a couch. Thus, identifying specific vendors that sell only luxury and/or high priced item may provide a more realistic approach. In one embodiment, step 308d may be implemented to assign a category based upon the vendor.

Such purchases through identified vendors may be divided by the sum of the number and/or dollar amount for transactions believed to be predominately necessity (shown in the list below). In one embodiment, one or more vendors may be selected from the group consisting of: Entertainment, Lodging, Rental Cars, Restaurants, Retailers - Up Scale, Travel Services, and Home Improvement.

In yet another embodiment, categories may be identified as Necessity. Such categories may include, but are not limited to: Debt Payments, Gas Stations, Grocery Stores, Healthcare, Insurance, Mortgage Debt Payments, and Utilities, such as electricity, gas, water. Those skilled in the art will realize that the above-referenced Discretionary and Necessity categories are merely exemplary and that numerous other categories may be considered as well as subdividing the categories above.

In yet another embodiment, categories may be identified as Discretionary. Such categories may include, but are not limited to: Airlines, Coffee Stores, Craft Stores, Entertainment, Lodging, Rental Cars, Restaurants, Retailers - Up Scale, Smoothie Stores, and/or Travel Services. The type of entity, however, may dictate whether such categories are classified as discretionary or necessity. For example, while travel expenses may be considered discretionary for one individual, to another or a business, travel expenses may be a necessary part of their business. In one embodiment, the industry (or other classification) may be assigned to one or more accounts associated with an individual or business (see step 308d). Indeed, an increase in travel expenses may signify an increase in business activity - and forecast a projected profit. Such expenditures that may be of particular importance in one or more embodiments may include, but are not limited to: Airlines, Entertainment, Lodging, Rental Cars, Restaurants, and/or Travel Services.

At step 310, an index score may be calculated. In one embodiment, at least one of the investment sub-score, the account sub-score, and/or the discretionary spending sub-score is utilized. In one embodiment, the index score is calculated by using all three sub-scores. In one such embodiment, each of the three sub-scores are summed together to create the index score. In yet another embodiment, one or more of the sub-scores are "weighted" more heavily than another sub-score. In yet another embodiment, one or more additional sub-scores or considerations or inputted into the calculation of the index score. In one embodiment, the time-frame utilized when calculating each sub-score is the same, yet in other embodiments, at least one sub-score was calculated with a different time-frame than another sub-score. In one embodiment, the geographic range utilized in determining one sub-score, such as the opening or closing of accounts may be the same as the geographic range utilized in the calculation of another sub-score.

At step 312, demographic data associated with the transactional data may be received. In one embodiment, step 312 may first collect a plurality of index scores each representing an individual or entity within a geographic range (i.e., step 312a) such as using information available from step 310. Step 312b may be implemented to compare the demographic data associated with the transactional data collected at step 312a with other demographic data (i.e., data not associated with the transactional data) to determine the population dynamics for the transactional data. Step 312c may be implemented to determine if the data associated with the transactional data is statistically different than that of the other demographic data. In one embodiment, if the demographic data not associated with the transactional data is different, then in embodiment, it is not used in the determination of the population dynamics (step 312d). For example, the demographic data represent an MSA (Metro Statistical Area). In one embodiment, the demographic data associated with the transactional data regarding entities in the MSA of Charlotte, N.C. may not accurately represent the MSA data for the entire population of Charlotte, N.C. Therefore, in at least one embodiment, that MSA data is not combined or otherwise used in step 312.

In another embodiment, however, step 312e may be conducted following 312d, in which demographic data representing another geographic area may be utilized. For example, in one embodiment, Charlotte, N.C. may have the similar demographic characteristics as another MSA, thus demographic data from a second MSA may be used in conjunction with, or as an alternative to, the demographic data from which the data was collected (Charlotte, N.C.). In another embodiment, the actual data collected from the transactions may strongly differ from the demographic data (e.g., MSA data) relating to the geographic region (Charlotte, N.C.) in which it originated from. For example, the collection of transactions (or a portion thereof) received in step 302 may originate from a younger demographic group than is the average of the MSA. In one embodiment, it may be determined that such individuals are college students. In one embodiment, the demographic MSA data from Charlotte may not be used, but rather demographic data from college towns, such as Raleigh/Durham, N.C. or Gainesville, FL may be utilized. (See Step 312e).

Step 314 may be implemented to receive a plurality of index scores representing an individual or entity and use the index scores to create an index for a geographic region. In one embodiment, the geographic region corresponds to an MSA. In other embodiments, the geographic range may be a city, a county, a state, or an entire country, Indeed, any geographic range may serve as the geographic region for the purposes of this disclosure. The creation of an index may be performed by a myriad of computational methods known in the art. Indeed, in one embodiment, the mean, mode, or medium of the individual index scores may be used in the creation of the index.

Step 316 may optionally be implemented to determine the credit worthiness of the individual or entity for which at least one index score represents (see 316a). In one embodiment, a FICO® score for the individual may be received. The FICO® score may be used along with a cash flow and net worth statement and/or any information collected in steps 302-312. Indeed, some individual's spending may not accurately reflect the economic forces they are facing. In one embodiment, the index score may be weighted or scaled (step 316b) based upon the FICO® score or another indication of credit worthiness.

Further aspects of the invention relate to using one or more sub-scores from one or more industries to create an index. The calculation of the sub-scores may be conducted through one or more methods described above or its equivalent. In one embodiment, data collected as part of earlier analysis may be utilized. For example, one or more steps 302-316 may be conducted for a single entity and later that entity's sub-score(s) or portions thereof may be used in further analysis. In yet other embodiments, a step similar to step 302 may be conducted in which transactional data is received. Further steps may be implemented to categorize each transaction to an industry category (such as representing an economic sector). For example, one account's transaction may be an expenditure at a home improvements store. Equally, another transaction may be the home improvement store receiving the funds from the consumer's expenditure. Thus, not only is the received information in this embodiment useful to determine spending habits (e.g., discretionary or necessity) but also may provide an insight into the overall health of certain economic sectors.

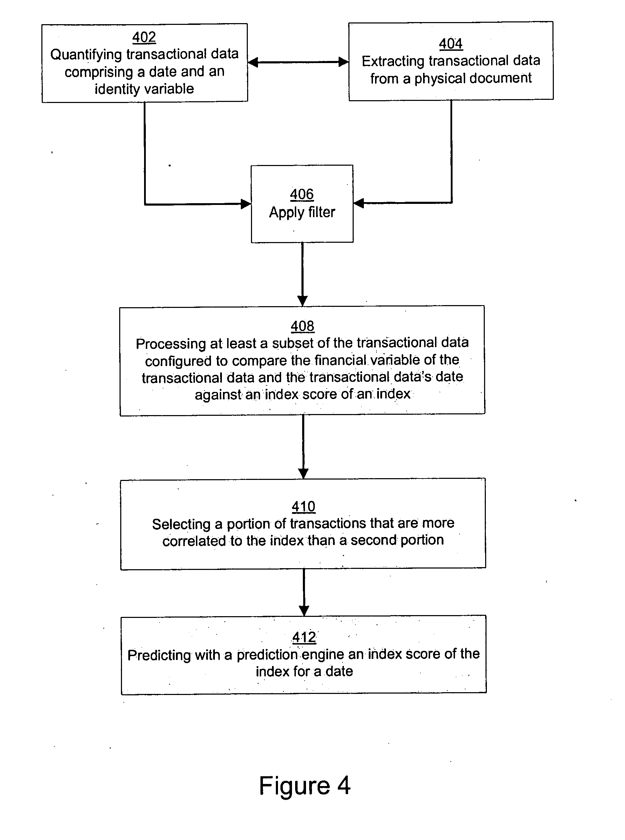

Further aspects of the invention relate to forecasting trends in one or more indices, such as financial market indices. Figure 4 is a flowchart of one exemplary method that may be used in conjunction with one or more embodiments of the invention to forecast index score trends in an index. As seen in Figure 4, step 402 may be implemented to quantify transactional data. The transactional data may reside on one more computer-readable mediums, such as memories 108, 112, and 116 (shown in Fig. 1), which may be located within numerous internal and/or external systems. Indeed, at least a portion of the transactional data retrieved as part of step 402 may be remotely located from other transactional data. In one embodiment, the transactional data is any electronic financial transaction. Exemplary transactional data may include checking account transactions, electronic bill payments transactions, and/or credit/debit card transactions. The transactional data may include purchases for goods and/or services.

In one embodiment, the transactional data comprises a date. The date may be indicative of the date that: the payee transmitted funds (such as conducting a purchase) to a payor, the payor received the transmitted funds, the post date, and/or any date relating to the transaction. The transactional data may further comprise an identity variable. In one embodiment, the identity variable may comprise information indicative of an entity involved in the transaction, such as the entity that received and/or transmitted funds in an electronic transaction. For example, identifying the entity may simply refer to the name (legal, common, or otherwise), yet in other embodiments, a numerical or alphanumeric code may represent an entity. In other embodiments, the identity variable may be indicative of an economic sector that an entity in the transaction may be categorized in. In one embodiment, the economic sector may be determined by the goods and/or services provided by an entity. Exemplary categories may include:
- 1.: Airlines
- 2.: Automobiles
- 3.: Brokerage
- 4.: Business Income
- 5.: Business Contractors / Supply
- 6.: Cash
- 7.: Charities & Donation
- 8.: Coffee Stores
- 9.: Computer Hardware/Software
- 10.: Craft stores
- 11.: Drug Stores/Pharmacy
- 12.: Debt Payments (not including Credit Cards with zero revolving balance)
- 13.: Education (Schools, Colleges, Universities, Vocational)
- 14.: Electronic Stores, retailers (online retailers)
- 15.: Entertainment
- 16.: Financial Services
- 17.: Fitness
- 18.: Gas Stations
- 19.: Grocery Stores
- 20.: Hair Care
- 21.: Health care
- 22.: Home Improvement Stores
- 23.: Income
- 24.: Insurance
- 25.: Internet Service Providers
- 26.: Lodging
- 27.: Magazine Subscriptions
- 28.: Mortgage Debt Payments
- 29.: Other Income
- 30.: Parking
- 31.: Pet Stores
- 32.: Phone Service
- 33.: Prepaid Cards
- 34.: Rental Cars
- 35.: Restaurants
- 36.: Discount Retailers
- 37.: Non-Discount Retailers
- 38.: Retirement Income
- 39.: Satellite TV/Cable TV
- 40.: Small Businesses
- 41.: Smoothie Stores
- 42.: Travel Services
- 43.: Utilities
- 44.: Wireless Phone Service

In one embodiment, the determination of an economic sector for a vendor may be based, at least in part, on a Standard Industrial Classification (SIC), for example as utilized by the Internal Revenue Service of the U.S. Government. In yet another embodiment, the determination may be based, at least in part, on a Merchant Category Code (MCC), for example, as utilized by Visa®. Those skilled in the art with the benefit of this disclosure will appreciate that other classifications may be used without departing from the scope of this disclosure.

Yet in other embodiments, the economic sector may include information indicative of the amount of annual revenue (either gross or net), whether, the entity is publically or privately traded, region(s) of operation and/or incorporation. Those skilled in the art will readily appreciate that the identity variable may consider one or more of the factors discussed above. In one embodiment, several factors are utilized to determine the economic sector. Moreover, a combination of information relating to the "entity" and the "economic sector" may be utilized to determine the identity variable of an entity.

The transactional data is quantified at step 402 according to a financial variable. In one embodiment, the financial variable may be the volume of transactions. For example, "Corporation A" may have 2,500 transactions for day 1, 2,650 transactions for day 2 and 1,175 transactions for day 3. Thus, the quantification may consider one or more of the transaction conducted on any or all of these days. Indeed, in one embodiment, the quantity of transactions over a date range may be quantified. The quantification may be beneficial in some embodiments where two different entities have transactions of disparate amounts. For example, the average transaction at a high-end department store may involve a greater monetary amount (e.g., around $250) when compared to the average transaction at a fast food establishment (e.g., $25). Yet in other embodiments, the monetary amount may be utilized as the financial variable. In yet further embodiments, a combination of the monetary amount and the transaction volume may be utilized as the financial variable.

While the quantification of the transactional data is shown by way of step 402, those skilled in the art having the benefit of this disclosure will readily appreciate that the quantification of the transactional data may be conducted before, during, or after other steps or processes within the methods disclosed herein. In one embodiment, the quantification of the transactional data is ongoing and is being updated on a routine basis.

While the above description refers to electronic transactions, further embodiments may utilize non-electronic transactions, or transactions that are at least partially conducted without electronic mechanisms. In one embodiment, step 404 may be implemented to extract transactional data from a physical document. Indeed, any physical document may be utilized. In exemplary embodiments, the physical document may be selected from the group consisting of: an invoice, a statement, commercial paper, and combinations thereof. As used herein, the term "commercial paper" refers to any legally binding document used to transfer money from one entity or individual to a second entity or individual. In one embodiment, the physical document is electronically processed, such as using optimal character recognition (OCR) or any other electronic process to extract data.

The transactional data may be then converted to a form substantially similar to the transactional data from a plurality of electronic transactions. For example, if the electronic data is in a file format such as a Comma Separated Value (CSV) file, then the extracted data may too be converted to the same format. There is no requirement that the extracted data have all of the same information as the electronic data. For example, if the electronic data includes the identity of the entity, this information may be extracted and/or the monetary amount of one or more transactions may be extracted. In one embodiment, the electronic data and the extracted data from the physical document each have one field in common.

In certain embodiments, step 406 may be implemented to filter, or otherwise remove specific transactions from processing in one or more additional steps. In one embodiment, vendors that conduct relatively smaller quantities of transactions within a time frame may not be considered. In one such embodiment, a processor may determine that transactional data comprises that an identity variable is indicative of an entity. A processor may then analyze the date of transactional data involving that entity within a time frame (e.g., 30 days). A processor may then determine whether the quantity of transactions conducted within that time frame exceeds a threshold. For example, if a commercial establishment, such as Company A, does not conduct an average of at least 2,500 transactions per day within a 30-day period, then transactions from that entity may not be considered in further analysis.

In yet other embodiments, entities that conduct transactions below a specific monetary amount may not be considered. In one such embodiment, a processor may determine that transactional data comprises that an identity variable is indicative of an entity. A processor may then analyze the date of transactional data involving that entity within a time frame (e.g., 30 days). In one embodiment, transactions within the time frame may be excluded if the monetary amount of the transaction is below a predefined numerical value, such as a threshold.

In yet other embodiments, the monetary amount and the quantity of transactions may both be considered together (with or without additional criteria) when determining which transactional data may be included in further analysis. Moreover, while the above examples had an identity variable of "entity," those skilled in the art will appreciate that the above examples are merely exemplary and are not intended to limit the filtering of transactions to such examples.

Step 408 may be implemented to process at least a subset of the transactional data. The processing may be performed with a comparison engine which is stored on a computer-readable medium with computer-executable instructions that are executed with a processor for performing the processing. In one embodiment, the comparison engine is configured to compare the financial variable of the transactional data and the transactional data's date against an index score of an index on a date to determine the correlation of at least a portion of transactions represented by the transactional data with the index score. For example, one embodiment the comparison engine is configured to perform the exemplary method shown in Example 1.

Example 1:
compare each of the transaction quantities of:
   Company A, time frame 1,
   Company B, time frame 1, ...
   Company Z, time frame 1,
against the index score of the index for time frame 1.

In yet another embodiment, the comparison engine is configured to perform the following exemplary method shown as Example 2.

Example 2:
compare each of the transaction quantities of:
   Economic Sector A, time frame 1,
   Economic Sector B, time frame 1, ...
   Economic Sector C, time frame 1,
against the index score of the index for time frame 1.

In yet another embodiment, the comparison engine is configured to perform the following exemplary method shown as Example 3.

Example 3:
compare each of the transaction quantities of:
   Economic Sector A, time frame 1,
   Company A, time frame 1, ...
   Economic Sector C, time frame 1,
against the index score of the index for time frame 1.

In one embodiment, the comparison engine may be configured to perform regression analysis to obtain the correlation between a specific company (or sector) with the index score. Those skilled in the art will readily appreciate that the above-referenced examples are merely illustrative embodiments and are not intended to limit the capabilities of the comparison engine.

Step 410 may be implemented to select a portion of transactions that are more correlated to the index scores of the index than a second portion of transactions. Step 410 may be performed with a selection engine. A selection engine may be stored on a computer-readable medium with computer-executable instructions that are executed with a processor for performing the selections. In one embodiment, the selection engine or computer device is configured to select the most correlated variables (such as "Company A, time frame 1" and/or "Economic Sector C, time frame 1"). The selection engine may be configured to select the one or more variables based on, at least in part, the result of regression analysis. The determination by the selection engine may be based on a quantity of variables. For example, in one embodiment, the most-correlated variables are selected. In yet another embodiment, only variables that have a specific accuracy are selected. Depending on the embodiment, the determination of the most-correlated variable may be determined by one or more criteria, such as but not limited to: R² value, standard error, standard deviation, and combinations thereof.

At step 412, the index score of the index for a date may be forecasted. Step 412 may be performed with a forecast engine. A forecast engine may be configured with a computer-readable medium with computer-executable instructions that are executed with a processor for performing the forecast. In one embodiment, the forecast engine may utilize the correlated variables of step 410 to forecast the index score. The forecast may be for a date range. Indeed, the forecast engine may be utilized to forecast several sequential dates to provide an ongoing forecast. In one embodiment, the date range is about between 30 days and 90 days from the current date. In yet another embodiment, the date range is about 60 days and 80 days from the current date. In still yet further embodiments, the date range includes about 75 days from the current date. The forecast engine may be utilized on a routine or ongoing basis; such that the forecast of the index score for a predetermined time period (e.g., a set number of days into the future) is forecasted on a daily basis.

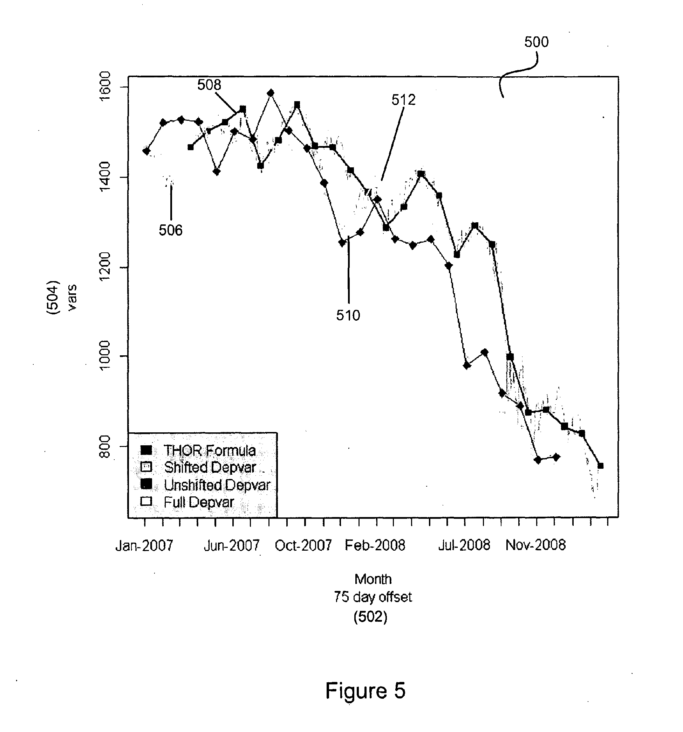

Aspects relating to one or more methods disclosed herein are best explained in view of Figure 5. Figure 5 shows a line graph 500 that depicts various features of an exemplary method in accordance with one exemplary method of the invention. As seen in Figure 5, the x-axis 502 of graph 500 may represent time. While the units of time are expressed in months, those skilled in the art will readily appreciate that any measurement of time may be utilized. The y-axis 504 of graph 500 may represent the financial variable of the transactions. For example, in the embodiment depicted in Figure 5, the financial variable is the quantity of transactions. As discussed above in more detail, other variables and/or data may be used in conjunction with one or more embodiments of the invention. Moreover, a second y-axis (not shown) may be provided, for example, on the right side of the graph 500. In one embodiment, the second y-axis may provide the index score of an index being forecasted.

Looking to Figure 5, line 506 shows exemplary results from a forecast engine. Line 506 displays a forecast of the index score of an index for several consecutive days. The data utilized in the forecast engine was outputted from a comparison engine that was configured to perform the exemplary method such as the example shown in Example 1. In one embodiment, at least one entity is a restaurant and at least one entity is a financial services institution. In one embodiment, at least one entity is a fast-food restaurant.

The index scores of the index being forecasted are shown by line 508. As shown, line 508 shows "data points" on a daily basis. In certain embodiments, more or less data points may be desired, obtained, or available for use. In one embodiment, line 510 may be generated or data representing line 510 may be used. As seen, line 510 removes some "noise" of the daily data points and rather shows a monthly average from the daily data points. Line 512 may optionally be generated to allow lines 506 and 510 to be viewed on a similar time frame. Specifically, the exemplary model shown in Figure 5 is forecasting an index score approximately 75 days in advance of the current date; therefore line 512 is shown to merely shifts line 510 back 75 days. The example shown in Figure 5 was able to forecast the range of index scores for the dates shown with an R² value = 0.95, where 1.0 is representative of a perfect correlation.

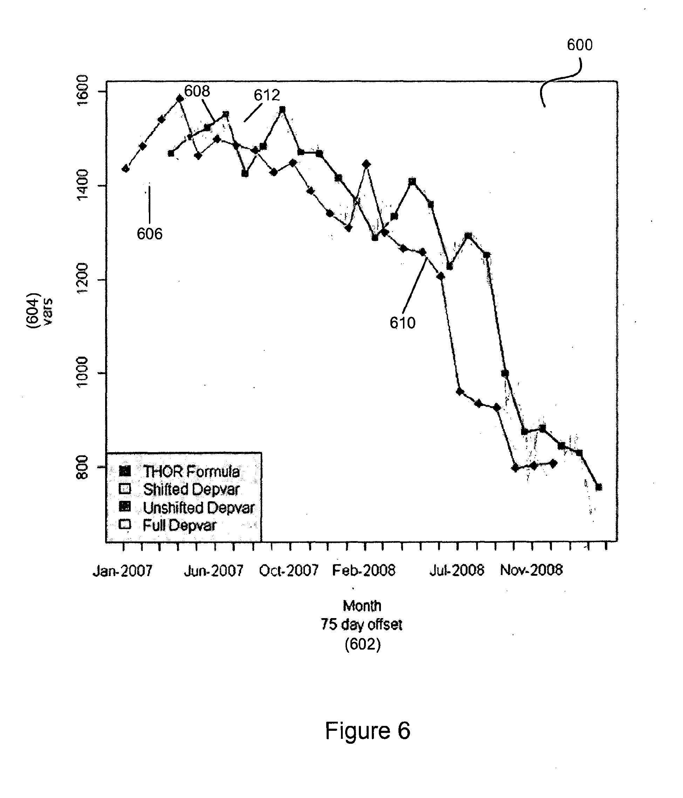

Figure 6 is similar in concept to Figure 5. As seen in Figure 6, the x-axis 602 of graph 600 represents time. While the units of time are expressed in months, those skilled in the art will readily appreciate that any measurement of time may be utilized. The y-axis 604 of graph 600 represents the financial variable of the transactions. For example, in the embodiment depicted in Figure 6, the financial variables include the quantity of transactions. Moreover, a second y-axis (not shown) may be provided, for example, on the right side of the graph 600. In one embodiment, the second y-axis may provide the index score of an index being forecasted.

Looking to Figure 6, line 606 shows exemplary results from a forecast engine. Line 606 represents a forecast of the index score of an index for several consecutive days. The data utilized in the forecast engine was outputted from a comparison engine that was configured to perform the exemplary method such as the example shown in Example 3 (both economic sectors and entities are considered). In one embodiment, at least one economic sector is restaurants. In yet another embodiment, the restaurant is a fast-food restaurant. In one embodiment, at least one economic sector is department stores and at least one entity is a grocery store.

The index scores of the index being forecasted are shown by line 608. As shown, line 608 shows "data points" on a daily basis. In certain embodiments, more or less data points may be desired, obtained, or available for use. In one embodiment, line 610 may be generated or data representing line 610 may be used. As seen, line 610 removes some "noise" of the daily data points and rather shows a monthly average from the daily data points. Line 612 may optionally be generated to allow lines 606 and 610 to be viewed on a similar time frame. Specifically, the exemplary model shown in Figure 6 is forecasting an index score approximately 75 days in advance of the current date; therefore line 612 is shown to merely shifts line 610 back 75 days. The example shown in Figure 6 was able to forecast the range of index scores for the dates shown with an R² value = 0.95, where 1.0 is representative of a perfect correlation.

Although not required, one of ordinary skill in the art will appreciate that various aspects described herein may be embodied as a method, a data processing system, or as a computer-readable medium storing computer-executable instructions. Accordingly, those aspects may take the form of an entirely hardware embodiment, an entirely software embodiment or an embodiment combining software and hardware aspects.

Aspects of the invention have been described in terms of illustrative embodiments thereof. Numerous other embodiments, modifications and variations within the scope and spirit of the appended claims will occur to persons of ordinary skill in the art from a review of this disclosure. For example, one of ordinary skill in the art will appreciate that the steps illustrated in the illustrative figures may be performed in other than the recited order, and that one or more steps illustrated may be optional in accordance with aspects of the disclosure.

## Claims

1. A computer-implemented method of forecasting trends with a system having a processor, the method comprising:
quantifying transactional data representing transactions comprising a date and an identity variable, wherein the transactional data is quantified according to a financial variable;
processing at least a subset of the transactional data with a comparison engine configured to compare the financial variable of at least a subset of the transactional data and the transactional data's date against an index score of an index on a date to determine the correlation of at least a portion of transactions represented by the transactional data with the index score;
selecting with a selection engine a portion of transactions that are more correlated to the index than a second portion; and
forecasting with a forecast engine an index score of the index for a date.

2. The computer-implemented method of claim 1 further comprising a memory,
wherein quantifying transactional data comprises quantifying transactional data stored in the memory comprising a date and an identity variable selected from the group consisting of: an entity, an economic sector, and combinations thereof, and wherein the transactional data is quantified according to a financial variable selected from the group consisting of: volume of transactions, the monetary amount of the transactions, and combinations thereof; and
wherein forecasting an index score comprises forecasting an index score of the index for a date in the future.

3. A computer-implemented method of claim 1 further comprising a computer-readable medium comprising computer-executable instructions that when executed perform the method, wherein the transactional data for at least one of the transactions comprises an entity and wherein the transactional data for at least a second transaction comprises an economic sector.

4. The method of claim 2 or 3, wherein the identity variable is indicative of an economic sector, the method further comprising:
identifying entities within an economic sector having a predefined quantity of transactions within a predefined time period, wherein transactions involving the entities that do not have the predefined quantity of transactions within the economic sector will not be processed by the comparison engine.

5. The method of claim 4, wherein the predefined quantity is an average of about 2,000 transactions per day for a 30 day period.

6. The method of any of claims 2-5, wherein the identity variable is indicative of an economic sector and the transactional data is associated with data indicative of an MCC code and the method further comprising:
determining a subset of the transactional data to be quantified based upon the MCC code.

7. The method of any of claims 2-6, further comprising:
determining that the identity variable is indicative of an entity;
analyzing the date of the transactional data of transactions involving the entity within a time frame; and
determining whether the quantity of transactions involving the entity exceeds a predefined numerical value;
excluding transactions involving the entity within the time frame if the quantity of the transactions is below the predefined numerical value.

8. The method of any of claims 2-7, further comprising:
extracting transactional data from a physical document; and
converting the extracted transactional data to a form substantially similar to the transactional data from the plurality of electronic transactions.

9. The method of claim 8, wherein the physical document is selected from the group consisting of: an invoice, a statement, commercial paper, and combinations thereof.

10. The method of any of claims 2-9, wherein the financial variable comprises a monetary amount and if the monetary amount of the transaction is below a predetermined numerical value, the transactional data is not utilized to determine the correlation of at least a portion of transactions represented by the transactional data with the index score.

11. The method of any of claims 2-10, wherein the transactional data comprises a plurality of economic sectors and a plurality of entities.

12. The method of any of claims 2-10, wherein the transactional data selected with the selection engine comprises a plurality of economic sectors and a plurality of entities.

13. The method of any of claims 2-12, wherein at least one economic sector includes a plurality of department stores and at least one entity is a grocery store.

14. An apparatus comprising:
a processor;
a tangible computer-readable medium comprising computer-executable instructions that when executed by the processor cause the apparatus to perform a method comprising:
receiving transactional data comprising a date and an identity variable selected from the group consisting of: an entity, an economic sector, and combinations thereof, wherein the transactional data has been quantified according to a financial variable selected from the group consisting of: volume of transactions, the monetary amount of the transactions, and combinations thereof;
a comparison engine configured to process at least a subset of the transactional data by comparing the financial variable of the transactional data and the transactional data's date against an index score of an index on a date to determine the correlation of at least a portion of transactions represented by the transactional data with the index score;
a selection engine configured to select a portion of transactions that are more correlated to the index than a second portion; and
a forecast engine for forecasting an index score of the index for a date.

15. The apparatus of claim 14, wherein the computer-readable medium further comprises computer-readable instructions that when executed by a processor perform the method of:
extracting transactional data from a physical document; and
converting the extracted transactional data to a form substantially similar to the transactional data from a plurality of electronic transactions.

16. The apparatus of claim 15, wherein the physical document is selected from the group consisting of: an invoice, a statement, commercial paper, and combinations thereof.
